# NEUE EUROPÄISCHE PATENTSCHRIFT

(11) **EP 1 824 938 B2**
(45) Veröffentlichungstag und Bekanntmachung des Hinweises auf die Entscheidung über den Einspruch: **10.04.2013**
(45) Hinweis auf die Patenterteilung: 18.03.2009
(21) Anmeldenummer: 05813958.5
(22) Anmeldetag: 01.12.2005
(51) Int. Cl.: C09J 5/00, C09J 5/02

(54) **PRIMERLOSE VERKLEBUNG VON PROFILEN**
PRIMERLESS ADHESION OF PROFILED SECTIONS
COLLAGE SANS PRIMAIRE SUR DES PROFILES

(30) Priorität: 01.12.2004 DE 102004057988
(43) Veröffentlichungstag der Anmeldung: 29.08.2007
(73) Patentinhaber: Klebchemie M.G. Becker GmbH & Co. KG, 76356 Weingarten/Baden (DE)
(72) Erfinder: BECKER-WEIMANN, Klaus, 76227 Karlsruhe (DE); EHRMANN, Elke, 76277 Karlsruhe (DE)
(74) Vertreter: Isenbruck, Günter
(86) Internationale Anmeldenummer: PCT/EP2005/012817
(87) Internationale Veröffentlichungsnummer: WO 2006/058739

(56) Entgegenhaltungen:
- EP-A- 0 241 027
- WO-A2-00/10788
- DE-A1- 2 601 786
- DE-A1- 4 343 468
- DE-A1- 19 908 564
- DE-A1- 19 946 617
- US-A- 6 103 152

## Beschreibung

Die vorliegende Erfindung betrifft ein Verfahren zur maschinellen Folienverklebung von profilierten Werkstücken.

Die Verklebung von Gegenständen ist - insbesondere im industriellen Bereich - ein Prozess, der genau zu führen ist, um adäquate Verklebungsergebnisse zu erzielen. Für ein gutes Verklebungsergebnis ist sicherzustellen, dass eine gleichmäßige und dauerhafte Verklebung erfolgt. Im Regelfall vieler Anwendungen, etwa bei der Verklebung von Kunststoffen miteinander, wie bei Fensterprofilen, auf welche Schutz- und/oder Zierfolien aufzukleben sind, ist es üblich, dass zunächst der Untergrund vorbehandelt wird, um gute Verklebungsergebnisse zu erzielen.

US-A 6,103,152 offenbart ein Verfahren zur Herstellung von Gegenständen mit Hilfe eines extrudierten Schaums. Dieser Schaumgegenstand kann Teil eines mehrlagigen Gegenstandes sein, wobei ein weiterer Bestandteil eine Metallfolie sein kann.

EP-A 241 027 offenbart ein Verfahren zur Profilumhüllung, wobei in Figur 1 eine geeignete Vorrichtung zur Durchführung des Verfahrens zeigt. Hierbei wird eine Folienbahn oder ein Film zu einer Beschichtungsstation befördert, so dass ein Beschichter eine Klebstoffzusammensetzung auf der Folie aufbringen kann und danach diese mit Hilfe einer UV-Strahlungsstation bestrahlt und einem Substrat 7 zugeführt wird, so dass beides miteinander an einer entsprechenden Station laminiert werden kann. Hierbei wird die Folienbahn oder der Film um das Substrat gewickelt und an die gebogenen Oberflächen mit Hilfe von Anpressrollen anlaminiert.

DE-OS 26 01 786 beschreibt einen als geformtes Gebilde vorliegenden Schmelzkleber auf (Meth)acrylatbasis, der dem Verbinden von zwei Werkstoffoberflächen dient und einen Temperaturbereich zwischen 100 und 200 °C erreicht.

Im Stand der Technik sind verschiedene Vorbehandlungsschritte bekannt.

Meistens wird ein Material (Primer) aufgetragen, welches dafür sorgt, dass sich der später aufzutragende Klebstoff mit dem Kunststoffträger des Grundkörpers innig verbindet. Der Primer dient somit zur Haftvermittlung durch Einwirkung auf die Oberfläche des zu verklebenden Gegenstandes.

Üblicherweise wird hierbei eine Primerschicht von etwa 1-30 µm aufgetragen. Dies kann zum Beispiel dadurch geschehen, dass der Gegenstand auf einer Förderbahn an einer Auftragevorrichtung wie einem Wischfilz entlang bewegt wird.

Der Primer enthält häufig ein Polyesterharz, das in leichtflüchtigen, organischen Lösemitteln wie Dichlormethan gelöst ist. Die Verwendung von Primern, die auf leichtflüchtige, organische Lösemittel basieren, ist jedoch in zunehmendem Maß aus verschiedenen Gründen unerwünscht. So ist beispielsweise das Entfernen des in der Luft befindlichen gasförmigen Lösemittels kostspielig.

Wasserbasierte Primer, wie sie beispielsweise in DE-A 44 28 382 offenbart sind, vermeiden die oben beschriebenen Probleme, haben jedoch häufig den Nachteil, dass in herkömmlichen Anlagen zwischen Auftragung des Primers und Verklebung die Einwirkzeit zu gering ist und/oder es so viel Material aufgetragen werden muss, dass auf Grund der geringen Dampfdrücke keine ausreichende Trocknung des Primers erfolgen kann.

Es wurden daher auch Vorbehandlungsschritte entwickelt, bei denen der Einsatz von Primern vermieden werden kann.

So beschreibt DE-A 103 20 581 die Verwendung von Bürsten zur mechanischen Vorbereitung der zu verklebenden Oberfläche.

Weiterhin wird in DE-A 10 2004 034 795 vorgeschlagen, dass der Einsatz von Primern vermieden werden kann, wenn eine der zu verklebenden Gegenstände mit Hilfe von Trockeneis vorbehandelt wird.

Auch die Vorbehandlung mit Seifenlauge ist bekannt.

In allen diesen Verfahren wird jedoch vorausgesetzt, dass es für die Verklebung beispielsweise einer Folie auf einem profilierten Werkstück eines Vorbereitungsschrittes bedarf, bevor ein Klebstoff auf zumindest eine Oberfläche aufgebracht wird. Weiterhin wird aus praktischen Gründen davon ausgegangen, dass bei Verklebung einer Folie mit einem profilierten Werkstück der Klebstoff zunächst auf die Folie aufgebracht werden sollte.

Die Aufgabe der vorliegenden Erfindung ist es, ein Verfahren bereitzustellen, das auf die vorgenannten Vorbehandlungsschritte verzichtet und daher einfacher durchzuführen ist und dennoch vergleichbar gute Verklebungsergebnisse liefern kann.

Die Aufgabe wird gelöst durch ein Verfahren zur maschinellen Folienverklebung von profilierten Werkstücken, die Schritte enthaltend
(a) Aufbringen eines Klebstoffs auf den zu verklebenden Bereich der Werkstückoberfläche;
(b) Aufbringen der Folie auf den zu verklebenden Bereich der Werkstückoberfläche,
wobei die Werkstoffoberfläche aus Kunststoff, Aluminium oder Legierungen hiervon besteht, wobei dem Klebschritt keine mechanische und/oder chemische Vorbehandlung vorausgeht und
wobei der Klebstoff ein reaktiver Polyurethan-Schmelzklebstoff ist.

Es wurde nämlich gefunden, dass entgegen der Auffassung im Stand der Technik eine ausreichende Verklebung erreicht werden kann, wenn auf die bekannten Vorbereitungsschritte verzichtet wird, wobei jedoch der Klebstoff auf das profilierte Werkstück anstatt auf die zu verklebende Folie aufgebracht wird.

Weiterhin wurde gefunden, dass die Klebewirkung noch erhöht werden kann, wenn das profilierte Werkstück und/oder der Klebstoff beim Aufbringen dieses erwärmt sind.

Der Verklebung geht keinerlei Vorbereitungsschritt durch Bürsten, Strahlen, Primern oder eine Behandlung mit Seifenlauge voraus. Insbesondere geht dem Klebeschritt keine mechanische und/oder chemische Vorbehandlung voraus.

Vorzugsweise erfolgt sowohl das Aufbringen des Klebstoffs als auch das Aufbringen der Folie maschinell. Es kann jedoch auch nur einer dieser Schritte maschinell durchgeführt werden.

Zum Aufbringen des Klebstoffs bestehen mehrere Möglichkeiten. Das Aufbringen könnte mit Hilfe eines Auftragswerkzeuges in Form eines Werkstückabdruckes verwendet werden, über das der Klebstoff appliziert wird.

Weiterhin wäre das flächige Aufbringen des Klebstoffes auf die Profiloberseite des Werkstückes in leichtem Überschuss möglich, wobei eine anschließende Verteilung bzw. Umleitung des Überschusses auf die angrenzenden Profilseiten mittels Rakel oder Spatel erfolgen kann.

Ebenfalls möglich wäre die Aufbringung des Klebstoffs mittels flexibel justierbarer Rollensysteme. Diese Systeme sind auch für das Aufbringen der Folie nach dem Klebstoffauftrag geeignet.

Insbesondere erfolgt das Aufbringen der Folie auf den zu verklebenden Bereich mit Hilfe von Profilummantelungsvorrichtungen. Solche Vorrichtungen werden beispielsweise von den Firmen Friz Kaschiertechnik GmbH (Weinsberg, DE), Barberän (Barcelona, ES) und Delle Vedove Levigatriei SpA (Pordenone, IT) angeboten.

Das Werkstück ist bevorzugt ein lang gestreckter profilierter Gegenstand, insbesondere ein Fensterprofil. Normalerweise besteht das profilierte Werkstück aus Kunststoff. Das erfindungsgemäße Verfahren kann jedoch auch auf Aluminium oder Legierungen hiervon, wie sie beispielsweise im Fensterbau verwendet werden, angewendet werden.

Der Kunststoff besteht hierbei typischerweise aus Thermoplasten, wie beispielsweise Polyethylen, Polypropylen, Polybutylen, Polyvinylchlorid (PVC), Polyacrylaten oder Polymethacrylate, oder Mischungen hiervon. Vorzugsweise besteht der Kunststoffgegenstand aus PVC oder Polypropylen.

Es ist vorteilhaft, wenn das Werkstück und/oder der Klebstoff beim Aufbringen des Klebstoffes auf die Werkstückoberfläche erwärmt sind. Vorzugsweise beträgt die Temperatur mindestens 40°C.

Weitere geeignete Temperaturen für den Klebstoff bzw. das Werkstück betragen mindestens 50°C, vorzugsweise mindestens 60°C, besonders bevorzugt mindestens 80°C Die Obergrenze für den Klebstoff wird hier lediglich durch den Siede- / Schmelzpunkt bzw. -bereich des Klebstoffs gebildet. Weiterhin als Obergrenze ist die Temperaturstabilität des Werkstücks zu berücksichtigen.

Insbesondere das Werkstück kann höhere Temperaturen, beispielsweise über 100°C aufweisen. Auch Temperaturen von mindestens 125°C, bevorzugt mindestens 150°C sind möglich, sofern die Formstabilität des Werkstücks dem nicht entgegen stehen.

Sind Werkstück und Klebstoff erwärmt, können beide gleiche oder unterschiedliche Temperaturen aufweisen. Im Rahmen der vorliegenden Erfindung genügt es, wenn lediglich der zu verklebende Bereich der Oberfläche, insbesondere die äußerste Grenzschicht der Oberfläche, die angegebene Temperatur aufweist auch wenn in diesem Zusammenhang vereinfachend nur der Begriff "Werkstoff" verwendet wird.

Im Rahmen der vorliegenden Erfindung gelten Klebstoff oder der zu verklebende Bereich der Werkstoffoberfläche dann als erwärmt, wenn ihre Temperatur um mehr als 10°C, vorzugsweise um mehr als 15°C von der Umgebungstemperatur abweichen. Vorzugsweise wird von einer Umgebungstemperatur von 20°C ausgegangen. Somit gilt im Rahmen der vorliegenden Erfindung ein erwärmter Zustand dann als gegeben, wenn bei einer üblichen Raumternperatur von ca. 20°C der Klebstoff oder die Werkstoffoberfläche eine Temperatur von größer 30°C, vorzugsweise größer 35°C aufweisen.

Wie bereits erwähnt, kann eine ausreichende Verklebung erzielt werden, wenn das profilierte Werkstück mit Klebstoff versehen wird. Dies macht es nicht mehr zwingend erforderlich, wenn zusätzlich Klebstoff auf die Folie aufgebracht wird. Dennoch kann dies zusätzlich geschehen.

Vorzugsweise wird der Klebstoff in einer Stärke von 10 bis 150 µm nach bekannten Methoden aufgebracht.

Bei dem Kleber handelt es sich um einen reaktiven Polyurethan-Schmelzklebstoff, wie er beispielsweise von der Anmelderin als Kleiberit® PUR SK Serie vertrieben wird.

Das erfindungsgemäße Verfahren ist besonders geeignet, wenn der zu verklebende Bereich die gesamte Werkstückoberfläche umfasst (Folierung).

Die flächige Verklebung kann vorzugsweise auch als teilweise Ummantelung erfolgen.

Vorzugsweise beträgt die Foliendicke etwa 20 µm bis 400 µm. Die zu verklebende Folienoberfläche besteht vorzugsweise aus PVC, Polyacrylat, Polyester oder aus einem Holzfurnier.

Die nach dem erfindungsgemäßen Verfahren verklebten Folien weisen eine ausreichende Haftfestigkeit auf. Die Haftfestigkeit kann mit Hilfe des so genannten Schälwertes ermittelt werden. Dieser ist ein Maß für die Kraft, die benötigt wird, um die Folie wieder von dem Werkstück abzuziehen. Hierbei sollte ein Schälwert von mindestens 2,5 N/mm nach RAL 716-1 (Teil 7) erreicht werden. Vorzugsweise wird ein Wert von 3,0 N/mm nach 1 Woche gemäß der oben angegebenen RAL erreicht.

Die vorliegende Erfindung wird anhand des nachfolgenden Beispiels näher erläutert.

### Beispiel

Auf die Oberfläche eines nicht vorbehandelten Fensterprofils aus PVC wurde ein Polyurethan-Klebstoff (Kleiberit PUR 704.5) aufgetragen und mit einer PVC-Folie ummantelt. Der Versuch wurde für unterschiedliche Oberflächentemperaturen des Profils durchgeführt. Nach 7 Tagen wurde entsprechend der RAL 716-1 Teil 7 der Schälwert bestimmt.

Der in der RAL angegebene Mindestwert von 2,5 N/mm wurde erreicht, ohne dass eine Vorbehandlung beispielsweise durch Bürsten oder Strahlen (beispielsweise durch mit Hilfe von Trockeneis) oder mit Hilfe von Primern oder Seifenlauge erforderlich wäre. Es ging dem Klebeschritt somit keine mechanische oder chemische Vorbehandlung voraus.

Weiterhin zeigte sich, dass die Verklebung von erwärmten Profilen bessere Schälwerte erzielen.

## Patentansprüche

1. Verfahren zur maschinellen Folienverklebung von profilierten Werkstücken, die Schritte enthaltend
(a) Aufbringen eines Klebstoffs auf den zu verklebenden Bereich der Werkstückoberfläche;
(b) Aufbringen der Folie auf den zu verklebenden Bereich der Werkstückoberfläche,
wobei die Werkstückoberfläche aus Kunststoff, Aluminium oder Legierungen hiervon besteht, wobei dem Klebschritt keine mechanische und/oder chemische Vorbehandlung vorausgeht und wobei der Klebstoff ein reaktiver Polyurethan-Schmelzklebstoff ist.

2. Verfahren nach Anspruch 1, **dadurch gekennzeichnet, dass** das Aufbringen der Folie maschinell mit Hilfe einer Profilummantelungsvorrichtung durchgerührt wird.

3. Verfahren nach Anspruch 1 oder 2, **dadurch gekennzeichnet, dass** das Werkstück ein lang gestreckter profilierter Gegenstand, vorzugsweise ein Fensterprofil, ist.

4. Verfahren nach einem der Ansprüche 1 bis 3, **dadurch gekennzeichnet, dass** das Werkstück beim Aufbringen des Klebstoffes auf die Werkstückoberfläche erwärmt ist.

5. Verfahren nach einem der Ansprüche 1 bis 4, **dadurch gekennzeichnet, dass** der Klebstoff beim Aufbringen des Klebstoffs auf die Werkstückoberfläche erwärmt ist.

6. Verfahren nach Anspruch 4 oder 5, **dadurch gekennzeichnet, dass** die Temperatur mindestens 40°C beträgt.

7. Verfahren nach einem der Ansprüche 1 bis 6, **dadurch gekennzeichnet, dass** der zu verklebende Bereich die gesamte Werkstückoberfläche umfasst.

8. Verfahren nach einem der Ansprüche 1 bis 7, **dadurch gekennzeichnet, dass** die zu verklebende Folienoberfläche aus PVC, Polyacrylat, Polyester oder aus einem Holzfurnier besteht.

9. Verfahren nach einem der Ansprüche 1 bis 8, **dadurch gekennzeichnet, dass** der Schälwert der aufgebrachten Folie mindestens 2,5 N/mm gemäß RAL 716-1 Teil 7 beträgt.

## Claims

1. Process for the mechanical foil bonding of profiled workpieces, comprising the steps of
(a) applying an adhesive to the region of the workpiece surface that is to be bonded;
(b) applying the foil to the region of the workpiece surface that is to be bonded,
where the workpiece surface is composed of plastic, aluminium or alloys thereof, wherein the adhesive bonding step is not preceded by any mechanical and/or chemical pretreatment and the adhesive is a reactive polyurethane hot melt adhesive.

2. Process according to Claim 1, **characterized in that** the application of the foil is carried out mechanically with the aid of a profile wrapping device.

3. Process according to Claim 1 or 2, **characterized in that** the workpiece is an elongated profiled article, preferably a window profile.

4. Process according to one of Claims 1 to 3, **characterized in that** the workpiece has been heated when the adhesive is applied to the workpiece surface.

5. Process according to one of Claims 1 to 4, **characterized in that** the adhesive has been heated when the adhesive is applied to the workpiece surface.

6. Process according to Claim 4 or 5, **characterized in that** the temperature is at least 40°C.

7. Process according to one of Claims 1 to 6, **characterized in that** the region to be bonded comprises the entire workpiece surface.

8. Process according to one of Claims 1 to 7, **characterized in that** the foil surface to be bonded is composed of PVC, polyacrylate or polyester or of a wood veneer.

9. Process according to one of Claims 1 to 8, **characterized in that** the peel value of the applied foil is at least 2.5 N/mm in accordance with RAL 716-1 Part 7.

## Revendications

1. Procédé de collage automatique de films de composants profilés, qui comprend les étapes consistant à :
(a) appliquer un adhésif sur la zone à coller de la surface du composant ;
(b) appliquer le film sur la zone à coller de la surface du composant,
dans lequel la surface du composant est composée de matierè plastique, aluminium ou alliages de celui-ci, dans lequel l'étape de collage est précédée par aucun prétraitement mécanique et/ou chimique et dans lequel l'adhésif est un adhésif thermofusible réactif à base de polyuréthane.

2. Procédé selon la revendication 1, **caractérisé en ce que** l'application du film est réalisée automatiquement à l'aide d'un dispositif de revêtement de profilés.

3. Procédé selon la revendication 1 ou 2, **caractérisé en ce que** le composant est un article profilé allongé en longueur, de préférence un profilé de fenêtre.

4. Procédé selon l'une quelconque des revendications 1 à 3, **caractérisé en ce que** le composant est chauffé lors de l'application de l'adhésif sur la surface du composant.

5. Procédé selon l'une quelconque des revendications 1 à 4, **caractérisé en ce que** l'adhésif est chauffé lors de l'application de l'adhésif sur la surface du composant.

6. Procédé selon la revendication 4 ou 5, **caractérisé en ce que** la température est supérieure ou égale à 40°C.

7. Procédé selon l'une quelconque des revendications 1 à 6, **caractérisé en ce que** la zone à coller comprend la totalité de la surface du composant.

8. Procédé selon l'une quelconque des revendications 1 à 7, **caractérisé en ce que** la surface du film à coller est constituée de PVC, de polyacrylate, de polyester ou d'un bois de placage.

9. Procédé selon l'une quelconque des revendications 1 à 8, **caractérisé en ce que** la valeur de pelage du film appliqué est supérieure ou égale à 2,5 N/mm selon RAL 716-1 Partie 7.
